# EUROPEAN PATENT APPLICATION

(11) **EP 3 957 375 A1**
(43) Date of publication of application: **23.02.2022**
(21) Application number: 20932338.5
(22) Date of filing: 23.11.2020
(51) Int. Cl.: A63B 24/00, A63B 102/16

(54) **STROKE ANALYSIS SYSTEM FOR TABLE TENNIS**

(30) Priority: 21.04.2020 KR 20200048036
(71) Applicant: Gogotak Inc., Gwangju 61657 (KR)
(72) Inventor: KIM, Sang Gyung, Hwasun-gun Jeollanam-do 58126 (KR)
(74) Representative: Hübner, Gerd
(86) International application number: PCT/KR2020/016590
(87) International publication number: WO 2021/215608

(57) **Abstract**

The present invention comprises: a sensing unit for sensing user stroke data comprising the acceleration, angular velocity and angle of a stroke of a table tennis racket as well as vibration applied to the table tennis racket; and a control unit for determining the type and stroke accuracy of a stroke technique of a user by comparing the user stroke data and standard stroke data pre-stored in a standard database.

## Description

### [Field of Invention]

The present invention relates to a stroke analysis system for table tennis, and more particularly to a stroke analysis system for table tennis for calculating and storing a stroke trajectory length, an impact point, a racquet angle change, an impulse, etc., comparing the calculated data with pre-stored standard stroke information, and improving stroke accuracy.

### [Background of Invention]

In general, table tennis is a ball game in which a net is set in the center of a table tennis table and a small and light table tennis ball is hit with a racquet to an opposing area to play a game and is a game in which accurate stroke motion control and stroke force control of a player are very important due to the characteristics of the game in which a small and light ball is hit with a racquet.

Due to these characteristics, it is necessary to acquire and master stroke skill by continuously and repeatedly practicing stroke motion, and at the same time, natural conversion motion of forehand stroke and backhand stroke needs also be continuously practiced to acquire and master the skill.

For example, even in serve and receiving, which can be said to be start of a table tennis game, the height, speed, and direction of the table tennis ball are different depending on a server, and thus effective receiving is possible only through continuous practice, and furthermore, conversion into an attack is possible.

Table tennis is a sport made by hitting a ball with a racquet and rubber attached thereto or applying a spin, and in this case, performance of the racquet and rubber used for this purpose is very important because it is necessary to handle a small ball delicately or apply strong force using the small ball.

However, even if the performance of the racquet or the rubber is excellent, when stroke ability of a user does not exceed a predetermined level, accurate, fast, and strong stroke cannot be used in an actual table tennis game, and thus there is a need to develop a table tennis racquet system for improving stroke ability.

### [Summary of Invention]

### [Technical Problem to be Solved]

The object of the present invention is to provide a stroke analysis system for table tennis for measuring acceleration, angular velocity, inclination, etc. generated during a stroke of a table tennis racquet to output a stroke trajectory length, an impact point, impulse, or the like based on the measured data, and comparing the output data with pre-stored standard stroke information to output a result score, thereby easily performing training to improve stroke accuracy according to determination of the result score.

### [Technical Solution]

Therefore, the present invention provides a stroke analysis system for table tennis including a detector configured to detect user stroke data including vibration applied to a table tennis racquet with acceleration, angular velocity, and an angle that are generated during a stroke of the table tennis racquet, and a controller configured to compare the user stroke data with standard stroke data pre-stored in a standard database to determine a stroke skill type and stroke accuracy.

Here, the controller may include a user stroke data storage configured to continuously store the user stroke data, a stroke skill type calculator configured to compare similarity between the user stroke data and the standard stroke data using dynamic time warping (DTW) and to identify a stroke skill type, and a stroke accuracy calculator configured to calculate the user stroke data according to a preset calculation condition to output the calculated data in a form of an integrated evaluation score and to determine stroke accuracy.

The stroke skill type calculator may calculate a similarity degree between a time axis wavelength of a speed of the table tennis racquet for the user stroke data and a time axis wavelength of a speed of the table tennis racquet for the standard stroke data and may identify a stroke skill type.

The standard stroke data may include stroke data of a table tennis expert or a sport expert according to a plurality of stroke skill types and may be stored in the standard database, and the stroke skill type calculator may identify a stroke skill type by comparison between the user stroke data and the standard stroke data and may also calculate a matching rate depending on a matching degree.

The stroke accuracy calculator may calculate a stroke length using acceleration information included in the user stroke data and may determine the impact point through vibration data detected on the stroke length.

The stroke accuracy calculator may calculate the user stroke data for any one or more of a stroke conversion score of the table tennis racquet, an impact speed score, an impact angle change score, an impact position score, and a stroke trajectory inclination score to output the integrated evaluation score.

Here, the stroke conversion score may calculate a higher score as a conversion time **between** a fore stroke **and** a back stroke of the table tennis racquet is reduced.

The impact speed score may be calculated to be higher as a speed at the impact point is increased.

The impact angle change score may be calculated to be higher as an angle change of the table tennis racquet toward the impact point is reduced.

The impact position score may be calculated to be higher as the impact point is closer to a 3/4 point on the stroke length.

The stroke trajectory inclination score may be calculated to be higher as a total inclination of a stroke trajectory is closer to a horizontal line.

The stroke analysis system for table tennis may further include a data analyzer configured to match the user stroke data calculated by the stroke accuracy calculator with image data acquired through trajectory tracking of the table tennis racquet and a table tennis ball and to perform validation according to a matching result.

Here, the data analyzer may label the user stroke data on which the validation is completed through analysis and evaluation and also stores personal information of a user.

### [Effect of Invention]

The present invention may measure acceleration, angular velocity, inclination, etc. generated during a stroke of a table tennis racquet to output a stroke trajectory length, an impact point, impulse, or the like based on the measured data, may compare the output data with pre-stored standard stroke information to output a result score, thereby easily performing training to improve stroke accuracy according to determination of the result score.

According to the present invention, a piezo sensor may be installed in a table tennis racquet to measure a collision position of a table tennis racquet with a table tennis ball and to output a result score, thereby improving the accuracy of a hitting position of the table tennis ball using the table tennis racquet.

According to the present invention, acceleration information and angular velocity information included in preset standard stroke information may be compared with acceleration information and angular velocity information of the user, respectively, and a stroke skill of the user may be accurately identified of the user depending on a matching degree.

In addition, according to the present invention, an ideal stroke of the user may be analyzed in consideration of an angle change, an acceleration change, an impulse change, a conversion time to a fore stroke from a back stroke, etc. during a stroke of the table tennis racquet, and the analyzed data may be cumulatively stored based on personal information of the user, such as a key, and thus an optimal stroke trajectory may be recommended for each person.

### [Brief Description of Drawings]

FIGS. 1 to 2 are diagrams showing the configuration of a stroke analysis system for table tennis according to an embodiment of the present invention.
FIG. 3 is a diagram showing stroke analysis of a stroke analysis system for table tennis according to an embodiment of the present invention.
FIG. 4 is a diagram showing calculation of an integrated evaluation score depending on a calculation condition for a stroke analysis system for table tennis according to an embodiment of the present invention.
FIG. 5 is a diagram showing calculation of stroke length and an impact point for a stroke analysis system for table tennis according to an embodiment of the present invention.
FIG. 6 is a diagram showing calculation of impulse for a stroke analysis system for table tennis according to an embodiment of the present invention.
FIG. 7 is a diagram for explaining a table tennis ball impact position for a stroke analysis system for table tennis according to an embodiment of the present invention.
FIG. 8 shows an operating procedure of a stroke analysis system for table tennis according to another embodiment of the present invention.

### [Best Mode]

Hereinafter, embodiments of the present invention will be explained in detail with reference to the attached drawings.

The attached drawings for illustrating exemplary embodiments of the present invention are referred to in order to gain a sufficient understanding of the present invention, the merits thereof, and the objectives accomplished by the implementation of the present invention.

The present invention may, however, be embodied in many different forms and should not be construed as being limited to the embodiments set forth herein; rather, these embodiments are provided so that this disclosure will be thorough and complete, and will fully convey the concept of the present invention to those skilled in the art.

In the description of the present invention, certain detailed explanations of related art are omitted when it is deemed that they may unnecessarily obscure the essence of the present invention.

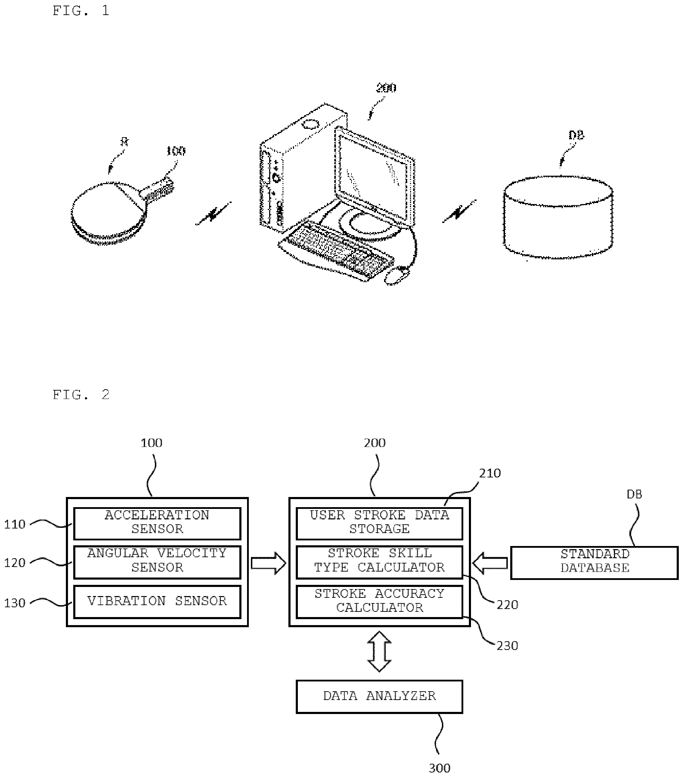

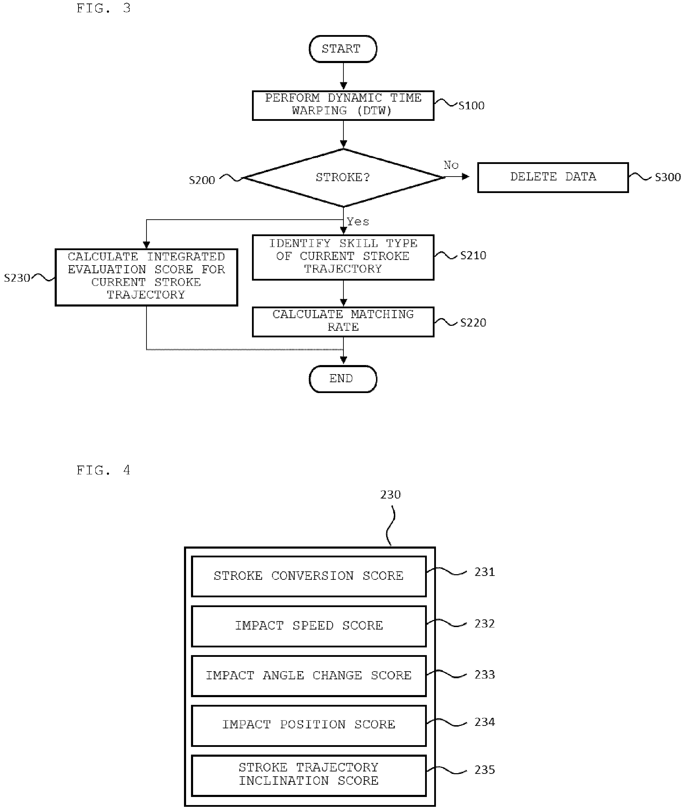

FIGS. 1 to 2 are diagrams showing the configuration of a stroke analysis system for table tennis according to an embodiment of the present invention, and FIG. 3 is a diagram showing stroke analysis of a stroke analysis system for table tennis according to an embodiment of the present invention.

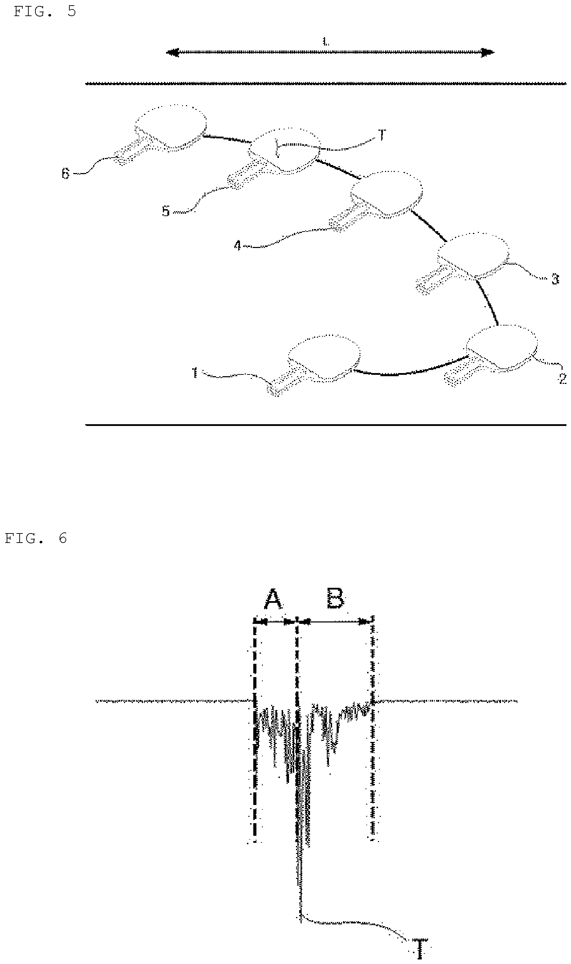

FIG. 4 is a diagram showing calculation of an integrated evaluation score depending on a calculation condition for a stroke analysis system for table tennis according to an embodiment of the present invention, and FIG. 5 is a diagram showing calculation of stroke length and an impact point for a stroke analysis system for table tennis according to an embodiment of the present invention.

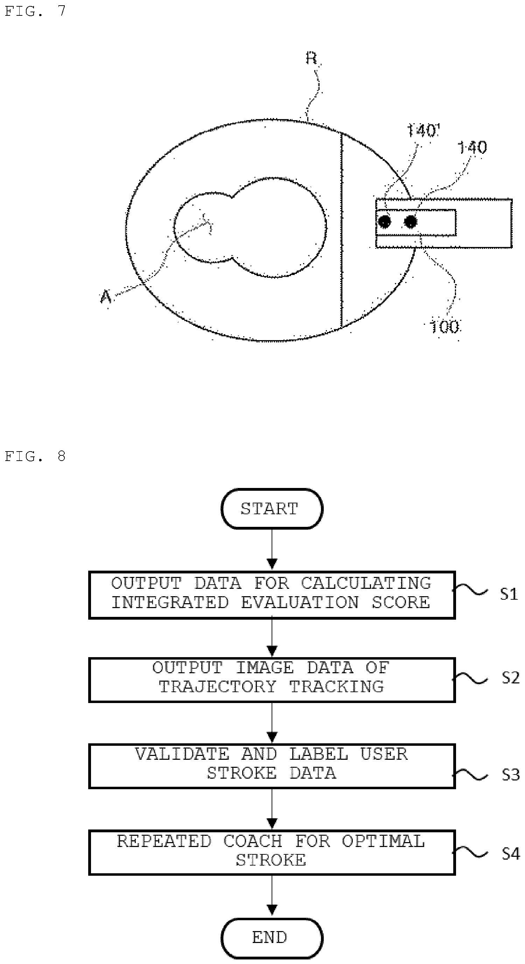

FIG. 6 is a diagram showing calculation of impulse for a stroke analysis system for table tennis according to an embodiment of the present invention, and FIG. 7 is a diagram for explaining a table tennis ball impact position for a stroke analysis system for table tennis according to an embodiment of the present invention.

As shown in FIGS. 1 to 2, the stroke analysis system for table tennis according to the present embodiment may include a detector 100, a controller 200, and a standard database DB, and although not shown, the stroke analysis system for table tennis may also include a battery part, a communication part, and the like.

The detector 100 may detect user stroke data including acceleration, angular velocity, an angle, and vibration for impulse calculation during stroke and may store information on the detected user stroke data in the standard database DB.

The detector 100 may be installed at a handle part of a table tennis racquet R and may be formed by combining a vibration sensor 130 with an acceleration sensor 110 and an angular velocity sensor 120.

In detail, the detector 100 may measure x-axis, y-axis, and z-axis accelerations through the acceleration sensor 110.

The detector 100 may measure x-axis, y-axis, and z-axis angles, that is, an angular velocity of the table tennis racquet R that rotates per hour through the angular velocity sensor 120, may measure the angle via integration over an entire time, and may calculate an angle change of the table tennis racquet R.

The detector 100 may detect vibration generated during collision between the table tennis racquet R and the table tennis ball through the vibration sensor 130 to calculate an impact point.

The controller 200 may compare the user stroke data detected through the detector 100, in other words, user stroke data of a current stroke calculated based on the acceleration sensor 110, the angular velocity sensor 120, and the vibration sensor 130 with standard stroke data to be described below to determine a stroke skill type and stroke accuracy.

To this end, the controller 200 may include a user stroke data storage 210, a stroke skill type calculator 220, and a stroke accuracy calculator 230.

First, the user stroke data storage 210 may continuously store the user stroke data detected by the detector 100.

The stroke skill type calculator 220 may compare similarity between the user stroke data detected by the detector 100 and standard stroke data stored in the standard database DB using dynamic time warping (DTW) and may identify a stroke skill type.

In general, the DTW is a method of calculating optimal matching between two given sequences, and the stroke skill type calculator 220 may calculate a similarity degree between a time axis wavelength of a speed of the table tennis racquet R for current stroke data and a time axis wavelength of a speed of the table tennis racquet R for the standard stroke data stored in the standard database DB and may identify a stroke skill type.

**[Table 1]**

| Name | Stroke skill type | | | |
|---|---|---|---|---|
| | Smashing | Drive | Cut | ... |
| Nam-gyu RYU | DB1 | DB'1 | DB"1 | ... |
| Jung-wha HYUN | DB2 | DB'2 | DB"2 | ... |
| Taek-su KIM | DB3 | DB'3 | DB"3 | ... |
| ... | ... | ... | ... | ... |

As shown in Table 1, standard stroke data of a table tennis expert is classified and stored in the standard database DB.

For example, in the standard database DB, the standard stroke data may be classified into a plurality of stroke skill types such as smashing, drive, or cut may be classified, and based thereon, the standard stroke data of a table tennis expert such as Nam-gyu RYU, Jung-wha HYUN, and Taek-su KIM may be classified and stored.

Here, upon detecting the user stroke data through the detector 100, the stroke skill type calculator 220 may compare the user stroke data with the standard stroke data of Table 1 above and may identify a stroke skill type to be output, which is similar to a stroke skill type of the current stroke, among the plurality of stroke skill types of the table tennis expert.

When there is meaningless motion of the table tennis racquet R, that is, when matching between the user stroke data and the standard stroke data is not achieved as the comparison result using the DTW, the stroke skill type calculator 220 may delete corresponding data.

When determining that the user stroke data is matched with standard stroke data of any one table tennis expert as the comparison result between the user stroke data and the standard stroke data using the DTW, the stroke skill type calculator 220 may output a corresponding skill type of the current stroke.

Here, when identifying a stroke skill type through comparison and calculation between the standard stroke data and the current stroke data, the stroke skill type calculator 220 may also calculate a matching rate such as "70% of smashing skill of Jung-wha HYUN" depending on whether the standard stroke data and the current stroke data are matched and may provide the matching rate in the form of a message, or the like to a user, etc.

Accordingly, the stroke skill type calculator 220 may also check a related image through a terminal (not shown) along with calculation of the stroke skill type and the matching rate based thereon, and thus may output an accurate stroke skill type and may allow the user to effectively determine whether the stroke skill of the user is used accurately.

The stroke accuracy calculator 230 may calculate the user stroke data stored in the user stroke data storage 210 according to a preset calculation condition to output the calculated data in the form of an integrated evaluation score and may determine stroke accuracy.

As shown in FIG. 4, the stroke accuracy calculator 230 may calculate the user stroke data according to any one or more of a score 231 based on a stroke conversion time of the table tennis racquet R, a speed score 232 at an impact point T, an impact angle change score 233 of the table tennis racquet R toward the impact point T, an impact position score 234 of the impact point T, and a stroke trajectory inclination score 235 to output an integrated evaluation score.

Here, the stroke conversion score 231 may output a higher score as a movement time to a position for the fore stroke again after the end of the stroke, i.e., a movement time to point 2 from point 1 in FIG. 5, is reduced,

That is, the stroke conversion score 231 may recognize whether the stroke proceeds forward or backward from x-axis, y-axis, and z-axis angular velocity values output from the angular velocity sensor 120 through the stroke accuracy calculator 230 and may output a higher score as a movement time of the table tennis racquet R to point 2 from point 1 in FIG. 5 is reduced.

In detail, the movement time needs to be within 0.1 seconds because, when 0.2 seconds elapses after back stroke is converted to fore stroke, the recoil may be reduced by that amount, and power may be reduced by more than 20% compared with the case of 0.1 seconds.

The impact speed score 232 may output a higher score because, as a speed at the impact point T is increased, in other words, as a speed difference between points 2 and 3 and points 4 and 5 in FIG. 5 is increased, a strong blow to the table tennis ball is possible.

The impact angle change score 233 may output a higher score because, as an angle change of the table tennis racquet R toward the impact point T is reduced, in other words, as an angle difference between points 3 to 5 in FIG. 5 is reduced, it is determined that the skill is used without shaking the table tennis racquet R when hitting.

The impact position change score 234 may calculate a higher score as the impact point T is closer to a 3/4 point (adjacent to point 5 in FIG. 5) on a stroke length L.

To this end, when acceleration of the table tennis racquet R moved to point 6 from a stroke start point, that is, point 2 in FIG. 5, is calculated by performing integration twice over a stroke time, a movement distance of the table tennis racquet R, in other words, the stroke length L may be calculated, and thus the impact point T may be calculated by detecting vibration over the stroke length L.

In general, when the table tennis ball collides with the table tennis racquet R, the acceleration may be largely changed, and in other words, when impact occurs, x-axis, y-axis, and z-axis accelerations are remarkably changed due to vibration as well as over time, and thus the impact point T in the stroke length L may be calculated using the changed information.

That is, as shown in FIG. 6, the stroke accuracy calculator 230 may detect a section in which stroke is performed through a variation of acceleration included in the user stroke data in order to calculate the impact position change score 234.

In other words, the stroke accuracy calculator 230 may detect an acceleration section A from a point (point 4 in FIG. 5) at which acceleration begins to be detected to a point (point 5 in FIG. 5) at which the highest acceleration is detected, and an impact section B from a point (point 5 in FIG. 5) at which the highest acceleration is detected to a point (point 6 in FIG. 5) at which the acceleration is gradually reduced and converges to 0.

Here, a point at which an acceleration variation is highest may be determined to be the impact point T and may be used as a calculation condition for calculation of the impact position change score 234.

The stroke trajectory inclination score 235 may output a higher score as a total inclination of a stroke trajectory, that is, a total inclination of the stroke length L is closer to a horizontal line, and in other words, a stroke trajectory angle is reduced.

As a result, when all of the scores 231 to 235 are highly evaluated, the stroke accuracy calculator 230 may output a high integrated evaluation score.

The stroke accuracy calculator 230 may also determine hitting accuracy by determining a table tennis ball impact position on the table tennis racquet R, at which the impact point T is formed, using a piezo sensor 140 included in the detector 100 together with the acceleration sensor 110, the angular velocity sensor 120, and the vibration sensor 130.

According to this principle, when the piezo sensor 140 is installed in the table tennis racquet R, a waveform is generated as the table tennis racquet R collides with the table tennis ball, and in this case, a collision position on the table tennis racquet R may be determined depending on the waveform by measuring a distance with the piezo sensor.

That is, when a table tennis ball is hit in a hitting area A shaped like '8' shown in FIG. 7, since a greater load is applied than at an edge of the table tennis racquet R, the stroke may be highly evaluated, and accordingly, the stroke accuracy calculator 230 may determine whether the table tennis ball is hit in the hitting area A through the piezo sensor 140.

In more detail, the stroke accuracy calculator 230 may further improve the accuracy of a hitting position of the table tennis ball by installing two or more piezo sensors 140 and 140' in the table tennis racquet R and may also correct an operation of the user to hit the table tennis ball in the hitting area A.

Based on the aforementioned configuration of the stroke skill type calculator 220 and the stroke accuracy calculator 230, calculation of a stroke skill type and output of an integrated evaluation score will be sequentially described with reference to FIG. 3.

The stroke skill type calculator 220 may compare user stroke data with standard stroke data using DTW (S100).

In this case, when the user stroke data does not match at all with data of a table tennis expert included in the standard stroke data, the stroke skill type calculator 220 may determine that the current motion is not stroke motion and may delete the corresponding data (S300).

In the aforementioned operation S100, when the user stroke data is determined to match with any one of data of a plurality of table tennis experts included in the standard stroke data using the DTW, the stroke may be determined to be normally performed (S200).

Here, the stroke skill type calculator 220 may compare the user stroke data with the standard stroke data and output a stroke skill, similar to a stroke skill type of the current stroke, among a plurality of stroke skill types such as smashing, drive, and cut of table tennis experts (S210).

In addition, the stroke skill type calculator 220 may also output whether a stroke skill type of the current stroke is similar to a stroke skill type of a table tennis expert among the table tennis experts as well as a stroke skill type and may also calculate and provide a matching rate depending on a matching degree (S220).

For example, the matching rate may be provided in the form of a message such as "70% of smashing skill of Jung-wha HYUN ".

When determining that a stroke is normally performed through the stroke skill type calculator 220 (S200), the stroke accuracy calculator 230 may calculate an integrated evaluation score for the current stroke trajectory (S230).

In the aforementioned integrated evaluation score calculation operation (S230), the integrated evaluation score may be calculated by synthetically evaluating a plurality of scores, and the integrated evaluation score may be evaluated by integrating the plurality of scores 231 to 235 calculated by the stroke accuracy calculator 230, and here, calculation of the plurality of scores 231 to 235 has been described above, and thus a detailed description will be described.

Hereinafter, FIG. 8 shows an operating procedure of a stroke analysis system for table tennis according to another embodiment of the present invention.

With reference to FIG. 8, the operating procedure of the stroke analysis system for table tennis according to the present embodiment will be sequentially described below.

First, a plurality of pieces of data calculated to calculate the integrated evaluation score may be called from the stroke accuracy calculator 230 described above with reference to FIG. 7 (S1).

In addition, image data of trajectory tracking of the table tennis racquet R and the table tennis ball which are photographed through a separate camera (not shown) may be called (S2).

That is, as shown in FIG. 2, a data analyzer 300 according to the present embodiment may match the user stroke data calculated by the stroke accuracy calculator 230 with the image data acquired through the camera and may perform validation according to the matching result, and to this end, may call the image data of trajectory tracking of the table tennis racquet R and the table tennis ball.

Here, when one-to-one matching of image data is completely performed to correspond to the user stroke data, in other words, when validation is completely performed, the matching data may be stored in a separate database (not shown), and the matching data that is accumulated in the database and is completely validated may be labeled with personal information including the height, age, gender, etc. of the user as well as analysis on whether the current stroke is good or bad by a table tennis expert or a sport expert and a type of a table tennis racquet (S3).

As such, when labeling of the matching data is performed (S3), the labeled matching data may be selectively transferred in response to a user request to provide corresponding image information with the user stroke data, for example, different accelerations, angular velocity values, and table tennis racquet types depending on a corresponding stroke skill type, and thus repeated coaching for the optimal stroke (a stroke with an integrated evaluation score to be calculated to be relatively high) may be performed (S4)

According to the present embodiment, when the matching data is labeled, personal information such as a height, an age, or gender is also labeled, the same data may also be provided to a user having similar personal information when there is a request of the corresponding user, and thus coaching recommendations for the optimal stroke may be possible.

According to the present invention, acceleration, angular velocity, inclination, etc. generated during a stroke of a table tennis racquet may be measured to output a stroke trajectory length, an impact point, impulse, or the like based on the measured data, the output data may be compared with pre-stored standard stroke information to output a result score, and thus training to improve stroke accuracy according to determination of the result score may be easily achieved.

According to the present invention, a piezo sensor may be installed in a table tennis racquet to measure a collision position of a table tennis racquet with a table tennis ball and to output a result score, thereby improving the accuracy of a hitting position of the table tennis ball using the table tennis racquet.

According to the present invention, acceleration information and angular velocity information included in preset standard stroke information may be compared with acceleration information and angular velocity information of the user, respectively, and a stroke skill of the user may be accurately identified of the user depending on a matching degree.

In addition, according to the present invention, an ideal stroke of the user may be analyzed in consideration of an angle change, an acceleration change, an impulse change, a conversion time to a fore stroke from a back stroke, etc. during a stroke of the table tennis racquet, and the analyzed data may be cumulatively stored based on personal information of the user, such as a key, and thus an optimal stroke trajectory may be recommended for each person.

### [Description of Reference Numerals]

- 100:: detector
- 110:: acceleration sensor
- 120:: angular velocity sensor
- 130:: vibration sensor
- 200:: controller
- 210:: user stroke data stroke
- 220:: stroke skill type calculator
- 230:: stroke accuracy calculator
- T:: impact point

## Claims

1. A stroke analysis system for table tennis comprising:
a detector configured to detect user stroke data including vibration applied to a table tennis racquet with acceleration, angular velocity, and an angle that are generated during a stroke of the table tennis racquet; and
a controller configured to compare the user stroke data with standard stroke data pre-stored in a standard database to determine a stroke skill type and stroke accuracy.

2. The stroke analysis system for table tennis according to claim 1, wherein the controller includes:
a user stroke data storage configured to continuously store the user stroke data;
a stroke skill type calculator configured to compare similarity between the user stroke data and the standard stroke data using dynamic time warping (DTW) and to identify a stroke skill type; and
a stroke accuracy calculator configured to calculate the user stroke data depending on a preset calculation condition to output the calculated data in a form of an integrated evaluation score and to determine stroke accuracy.

3. The stroke analysis system for table tennis according to claim 2, wherein the stroke skill type calculator calculates a similarity degree between a time axis wavelength of a speed of the table tennis racquet for the user stroke data and a time axis wavelength of a speed of the table tennis racquet for the standard stroke data and identifies a stroke skill type.

4. The stroke analysis system for table tennis according to claim 2, wherein the standard stroke data includes stroke data of a table tennis expert or a sport expert depending on a plurality of stroke skill types and is stored in the standard database, and the stroke skill type calculator identifies a stroke skill type by comparison between the user stroke data and the standard stroke data and also calculates a matching rate depending on a matching degree.

5. The stroke analysis system for table tennis according to claim 2, wherein the stroke accuracy calculator calculates a stroke length using acceleration information included in the user stroke data and determines the impact point through vibration data detected on the stroke length.

6. The stroke analysis system for table tennis according to claim 5, wherein the stroke accuracy calculator calculates the user stroke data for any one or more of a stroke conversion score of the table tennis racquet, an impact speed score, an impact angle change score, an impact position score, and a stroke trajectory inclination score to output the integrated evaluation score.

7. The stroke analysis system for table tennis according to claim 6, wherein the stroke conversion score calculates a higher score as a conversion time between a fore stroke and a back stroke of the table tennis racquet is reduced.

8. The stroke analysis system for table tennis according to claim 6, wherein the impact speed score is calculated to be higher as a speed at the impact point is increased.

9. The stroke analysis system for table tennis according to claim 6, wherein the impact angle change score is calculated to be higher as an angle change of the table tennis racquet toward the impact point is reduced.

10. The stroke analysis system for table tennis according to claim 6, wherein the impact position score is calculated to be higher as the impact point is closer to a 3/4 point on the stroke length.

11. The stroke analysis system for table tennis according to claim 6, wherein the stroke trajectory inclination score is calculated to be higher as a total inclination of a stroke trajectory is closer to a horizontal line.

12. The stroke analysis system for table tennis according to claim 6, further comprising:
a data analyzer configured to match the user stroke data calculated by the stroke accuracy calculator with image data acquired through trajectory tracking of the table tennis racquet and a table tennis ball and to perform validation according to a matching result.

13. The stroke analysis system for table tennis according to claim 12, wherein the data analyzer labels the user stroke data on which the validation is completed through analysis and evaluation and also stores personal information of a user.
